# EUROPEAN PATENT APPLICATION

(11) **EP 2 103 417 A1**
(43) Date of publication of application: **23.09.2009**
(21) Application number: 07850430.5
(22) Date of filing: 11.12.2007
(51) Int. Cl.: B29C 73/02, B29C 73/24, B60S 5/04, F04F 1/14, B29L 30/00

(54) **SEALING AND PUMPING DEVICE**

(30) Priority: 12.12.2006 JP 2006334818
(71) Applicant: Bridgestone Corporation, Tokyo 104-8340 (JP)
(72) Inventor: YOSHIDA, Masaki, Tokyo 104-8340 (JP); IZUMOTO, Ryuji, Tokyo 104-8340 (JP)
(74) Representative: Whalley, Kevin
(86) International application number: PCT/JP2007/073868
(87) International publication number: WO 2008/072629

(57) **Abstract**

A sealing and pumping device suppressing tipping over while also maintaining space saving characteristics. The sealing and pumping device 10 suppresses tipping over while also maintaining space saving characteristics by having: a liquid agent container 18 for containing a sealing agent and having an outlet for the sealing agent at a lower portion thereof; a compressor unit 12 for generating compressed air; an air supply path for introducing compressed air from the compressor unit 12 to the liquid container 18; a joint hose 78 for introducing sealing agent or compressed air flowing out of the liquid agent container 18 into a tire 100; a casing 11 housing therein at least the liquid agent container 18 and the compressor unit 12; and a lid 124 provided so as to be projectable outside from the casing 11, with another end face 126 of the lid 124 placed on an installation surface on which the casing 11 is placed to suppress the casing 11 from tipping over.

## Description

### Technical Field

The present invention relates to a sealing and pumping device for injecting a sealing agent into a pneumatic tire in order to seal a punctured pneumatic tire, and for supplying compressed air into a pneumatic tire to raise the internal pressure of the pneumatic tire.

### Related Art

Recently, sealing and pumping devices are becoming common which, when pneumatic tires (referred to below simply as tires) are punctured, the sealing and pumping devices repair the tire with a sealing agent and pump the internal pressure up to a specific specified pressure, rather than changing the tire or the wheel. The sealing and pumping device described in patent document 1, for example, is a known example of such a sealing and pumping device.

This sealing and pumping device is connected to a storage container containing sealing agent, and a foot portion having an installation face is formed to a bottom portion of a sealing agent ejection unit. Stable upright states of the storage container and the sealing agent ejection unit of the sealing and pumping device are secured by the foot portion.
Patent Document 1: Japanese Patent Application Laid-Open No. 2000-108215

### Disclosure of the Invention

### Problem to be Solved by the Invention

Due to their convenience, integrated sealing and pumping devices that integrate each device within a single casing are recently becoming common. Integrated sealing and pumping devices such as these are very often normally stored in the storage space of a vehicle, such as in the luggage room, and therefore space saving characteristics, namely compactness, is desired from the standpoint of efficient use of the luggage room.

However, when integrated sealing and pumping devices are made compact, there is a certain desirable orientation for ensuring discharge of a sealing agent within a liquid agent container containing the sealing agent (the orientation in which the sealing agent outlet of the liquid agent container faces the bottom in the vertical direction), and since the pressure withstanding ability of the liquid agent container is proportional to the diameter of the liquid agent container, the long narrow shape of the liquid agent container cannot be changed. This leads to a requirement for the integrated sealing and pumping devices to be narrow in thickness.

However, since narrow integrated sealing and pumping devices suffer from readily tipping over, a sealing and pumping device that does not readily tip over but nevertheless maintains space saving characteristics is desired in the marketplace.

The present invention is made in consideration of the above circumstances and an object thereof is to provide a sealing and pumping device that does not readily tip over, while maintaining the space saving characteristics thereof.

### Method of Solving the Problem

In order to achieve the above object, the sealing and pumping device of claim 1 of the present invention is a sealing and pumping device for injecting a sealing agent into a pneumatic tire by sending compressed air generated by an air supply source through a liquid agent container containing the sealing agent and into the pneumatic tire, the sealing and pumping device including: a casing housing therein at least the air supply source and the liquid agent container; and a tipping suppression member that is provided to the casing so as to be projectable outside from the casing in the width direction thereof, with at least a portion of the tipping suppression member being placed on an installation surface, on which the casing is placed, to suppress tipping over of the casing.

Explanation will now be given of the operation of the sealing and pumping device of claim 1.
When repairing a pneumatic tire, first an air-liquid supply tube, which introduces sealing agent or compressed air flowing out from the liquid agent container into the pneumatic tire, is connected to a valve of the pneumatic tire. Compressed air generated in the air supply source is introduced into the liquid agent container, through an air supply path for introducing compressed air from the air supply source into the liquid agent container, and sealing agent inside the container is pushed out from the container by the compressed air. The sealing agent pushed out from the container is supplied into the pneumatic tire through the air-liquid supply tube.

When the sealing agent from the liquid agent container ceases coming out, the compressed air is supplied into the pneumatic tire through the air-liquid supply tube. Air supply is halted when the stipulated pressure is achieved and the air-liquid supply tube is removed from the valve of the pneumatic tire. Preparatory running is then performed. The sealing agent thereby fills the puncture hole. After completing preparatory running, the air pressure is checked, and air is put in again if required. Repair of the pneumatic tire is thereby completed.

In the sealing and pumping device of claim 1, by making the tipping suppression member contact the ground surface when the casing is placed on an installation surface (such as a road surface) with the tipping suppression member is in a state projecting out to the outside from the casing in the width direction thereof, the ground contact shape of the casing is made larger than prior to projecting out the tipping suppression member. The sense of stability of the casing is thus increased and tipping over is suppressed. Also, when the tipping suppression member is in a state not projecting outside from the casing in the width direction thereof, there is so no concern of detriment to the space saving characteristics of the casing due to the tipping suppression member, and, for example, storage space within a vehicle can be effectively utilized even when the casing is stored therein.
The sealing and pumping device of claim 1 can therefore suppress tipping over while maintaining space saving characteristics.

A sealing and pumping device of claim 2 of the present invention is the sealing and pumping device of claim 1, wherein: a storage portion is formed in the casing for storing at least one of a power cable used for supplying power to the air supply source, and/or an air-liquid supply tube that introduces sealing agent or compressed air flowing out from the liquid agent container into the pneumatic tire; and the tipping suppression member is a lid covering the storage portion.

Explanation will now be given of the operation of the sealing and pumping device of claim 2.
By combining the tipping suppression member, for suppressing tipping over of the casing, with us as the lid of the storage portion, for storing at least one of the power cable and/or the air-liquid supply tube, the number of components is reduced, and a reduction in cost of the sealing and pumping device is achieved.

A sealing and pumping device of claim 3 is the sealing and pumping device of claim 1 or claim 2, wherein the tipping suppression member is detachably mounted to the casing.

Explanation will now be given of the operation of the sealing and pumping device of claim 3.
Since the tipping suppression member is detachably mounted the casing can be suppressed from tipping over by mounting the tipping suppression member so as to project outside from the casing in the width direction thereof, and the space saving characteristics can be maintained by mounting the tipping suppression member so as not to project outside from the casing. Consequently, by means of a simple structure, tipping over can be suppressed while maintaining space saving characteristics.

A sealing and pumping device of claim 4 of the present invention is the sealing and pumping device of claim 1 or claim 2, wherein the tipping suppression member is rotatably supported on the casing.

Explanation will now be given of the operation of the sealing and pumping device of claim 4.
Since the tipping suppression member is rotatably supported on the casing, the casing can be suppressed from tipping over by rotating the tipping suppression member so as to project outside from the casing in the width direction thereof, and the space saving characteristics can be maintained by rotating the tipping suppression member so as not to project outside from the casing. Consequently, by means of a simple structure, tipping over can be suppressed while maintaining the space saving characteristics. In addition, since the tipping suppression member is rotatably supported on the casing, there is no concern of the tipping suppression member being lost or the like.

The sealing and pumping device of claim 5 is the sealing and pumping device of claim 1 or claim 2, wherein the tipping suppression member is slidably supported on the casing.

Explanation will now be given of the operation of the sealing and pumping device of claim 5.
Since the tipping suppression member is slidably supported on the casing, the casing can be suppressed from tipping over by sliding the tipping suppression member so as to project outside from the casing in the width direction thereof, and the space saving characteristics can be maintained by sliding the tipping suppression member so as not to project outside from the casing. Consequently, by means of a simple structure, tipping over can be suppressed while maintaining the space saving characteristics. In addition, since the tipping prevention member is slidably supported on the casing, there is no concern of the tipping prevention member being lost or the like.

### Effect of the Invention

As explained above, the sealing and pumping device of the present invention can suppress tipping over, while maintaining space saving characteristics.

### Brief Description of the Drawings

FIG 1 is a schematic perspective view of a sealing and pumping device according to a first exemplary embodiment of the present invention, as viewed from the front face side.
FIG 2 is a configuration diagram of main portions showing a state in which a joint hose of a sealing and pumping device is connected to a tire valve of a pneumatic tire.
FIG 3 is a cross-section showing a configuration of a sealing agent container, injection unit, and press jig in a sealing and pumping device.
FIG 4 is a cross-section of a sealing agent container and injection unit into which a press jig has been inserted.
FIG 5A is a plan view of a sealing and pumping device in a lid-closed state, as viewed from the bottom face side.
FIG 5B is a plan view of a sealing and pumping device in a lid-open state, as viewed from the bottom face side.
FIG 6 is a schematic partial cross-section of cross-section A-A in FIG 5A.
FIG 7 is a schematic partial cross-section of cross-section B-B in FIG. 5B.
FIG 8A is a plan view of a sealing and pumping device of a second exemplary embodiment in a lid-closed state, as viewed from the bottom face side.
FIG. 8B is a plan view of a sealing and pumping device of the second exemplary embodiment in a lid-open state, as viewed from the bottom face side.
FIG. 9 is a schematic partial cross-section of cross-section C-C in FIG 8A.
FIG 10 is a schematic partial cross-section of cross-section D-D in FIG. 8B.
FIG 11A is a plan view of a sealing and pumping device of a third exemplary embodiment in a lid-closed state, as viewed from the bottom face side.
FIG 11B is a plan view of a sealing and pumping device of the third exemplary embodiment in a lid-open state, as viewed from the bottom face side.
FIG 12 is a schematic partial cross-section of cross-section E-E in FIG 11A.
FIG 13A is a plan view of a sealing and pumping device of a fourth exemplary embodiment in a state in which the lid of the sealing and pumping device does not project outside, as viewed from the bottom face side.
FIG 13B is a plan view of a sealing and pumping device of the fourth exemplary embodiment in a state in which the lid of the sealing and pumping device has been projected outside, as viewed from the bottom face side.
FIG 14 is a schematic cross-section of portion F of FIG. 13A.
FIG 15 is a schematic cross-section of portion G of FIG. 13B.
FIG 16 is a schematic partial cross-section of cross-section H-H of FIG. 14.
FIG 17A is a schematic perspective view of a state in which a lid is mounted to a portion at the top of a sealing and pumping device of a fifth exemplary embodiment.
FIG 17B is a schematic perspective view of a state in which a lid is mounted to a portion at the bottom of a sealing and pumping device of the fifth exemplary embodiment.
FIG 18 is a schematic cross-section of portion I of FIG 17B.
FIG 19 is a schematic view showing the relationship between a press jig provided to a lid and a press jig hole in a sealing and pumping device of a sixth exemplary embodiment.
FIG 20A is a schematic perspective view of a lid-closed state of a sealing and pumping device of a seventh exemplary embodiment, as viewed from the front face side.
FIG 20B is a schematic perspective view of a lid-open state of a sealing and pumping device of the seventh exemplary embodiment, as viewed from the front face side.
FIG 21A is a schematic perspective view of a lid-closed state of a sealing and pumping device of an eighth exemplary embodiment, as viewed from the bottom face side.
FIG 21B is a schematic perspective view of a lid-open state of a sealing and pumping device of the eighth exemplary embodiment, as viewed from the bottom face side.

### Best Mode of Implementing the Invention

### First Exemplary Embodiment

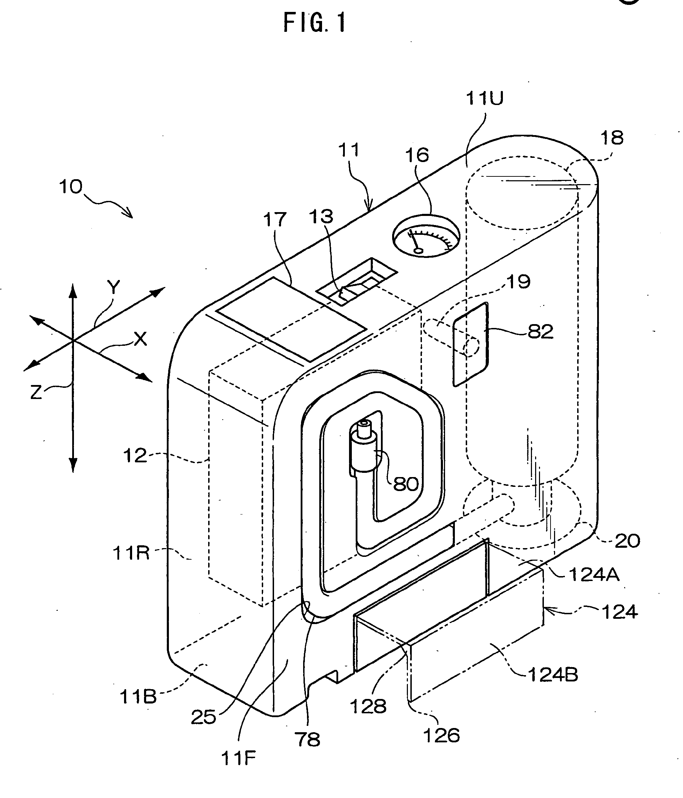

Explanation will now be given of a sealing and pumping device according to a first exemplary embodiment, with reference to FIGS. 1 to 7. Note that in the drawings arrow Z indicates the top-bottom direction of the sealing and pumping device, arrow X indicates the front-rear direction (width direction) of the sealing and pumping device, and the arrow Y indicates the left-right direction (a direction orthogonal to the width direction).

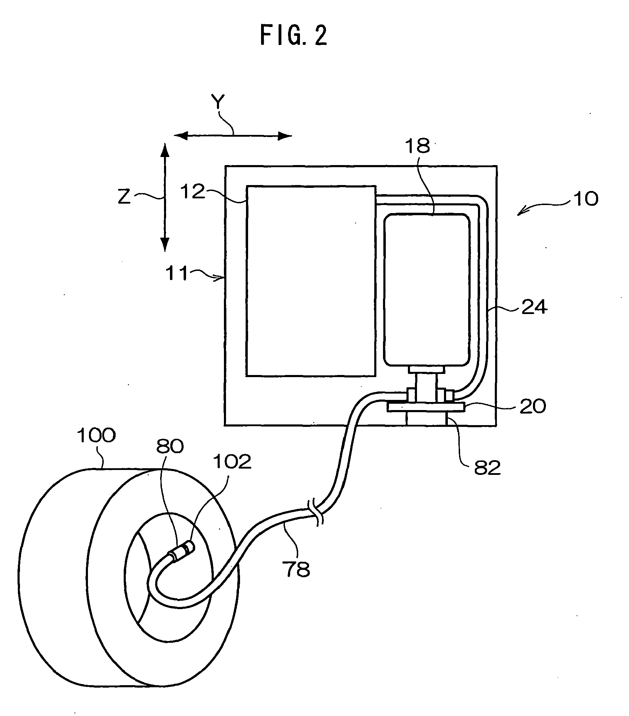

A sealing and pumping device 10 according to the first exemplary embodiment of the present invention, as shown in FIG. 1 and FIG. 2, is a device for, when a pneumatic tire (referred to below simply as tire) mounted to a vehicle, such as a car or the like, is punctured, repairing the tire with a sealing agent and increasing (pumping up) the internal pressure to a specific specified pressure, instead of changing the tire and the wheel.

The sealing and pumping device 10 is provided with a casing 11. A compressor unit 12, an injection unit 20, and a liquid agent container 18 connected to the injection unit 20, are disposed within this casing 11. The casing 11 is a narrow casing that is longer in the arrow Y direction than in the arrow X direction.

A motor, air compressor, power circuit, control board and the like are disposed within the compressor unit 12, and a power source cable 14 is provided extending from the power circuit to outside of the unit. For example, a power source can be supplied to the motor etc. from a battery mounted to a vehicle through the power circuit, by inserting a plug 15 provided at the leading end of the power source cable 14 into the socket of a cigarette lighter installed in the vehicle. The air compressor of the compressor unit 12 here is capable of generating compressed air at a pressure higher than the stipulated pressure for each of various types of tire 100 to be repaired (see FIG 2) (for example at 300kPa or above).

The compressor unit 12 is provided with a power switch 13 and a pressure gauge 16, with the power switch 13 and the pressure gauge 16 disposed in the vicinity of a central portion of a top face 11U of the casing 11. An operation manual 17 explaining the operation sequence is also disposed on the top face 11U of the casing 11, to the right hand side of the power switch 13.

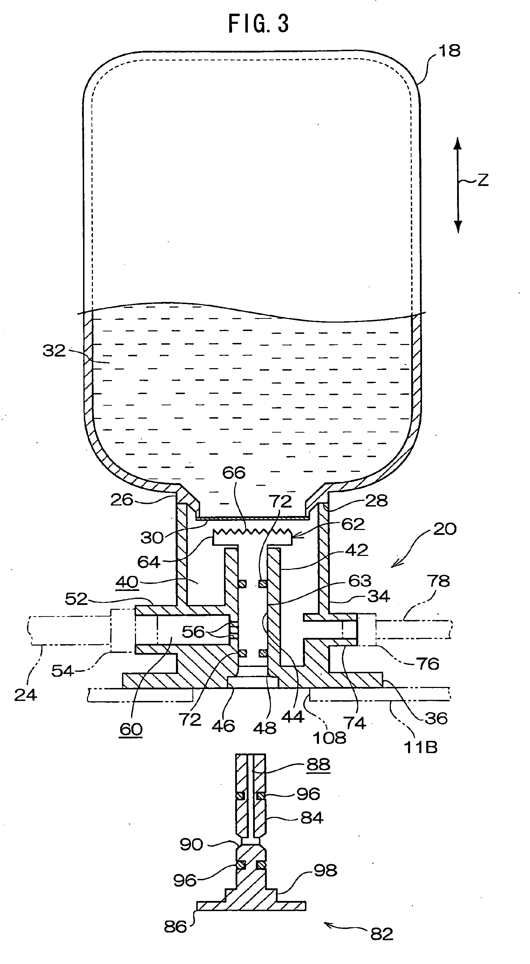

As shown in FIG 3, the sealing and pumping device 10 is provided with the liquid agent container 18 containing a sealing agent 32 and with the injection unit 20 connected to the liquid agent container 18. A neck portion 26 is integrally formed to a portion at the bottom end of the liquid agent container 18, the neck portion 26 being substantially a circular cylinder shape projecting downwards. The neck portion 26 is formed with a diameter narrower than that of a body portion of the container above the neck portion 26. An aluminum seal 30 is disposed across the open end of the neck portion 26, in order to seal the sealing agent 32 within the liquid agent container 18. The outer peripheral edge portion of the aluminum seal 30 is fixed around the whole of the peripheral edge portion of the opening of the neck portion 26, by use of an adhesive or the like: A step portion 28 is formed at an intermediate portion of the neck portion 26, projecting toward the peripheral outside.

The liquid agent container 18 is formed from a material with gas blocking characteristics, such as various resin materials or metal materials such as aluminum alloys or the like. Slightly more sealing agent 32 is filled within the liquid agent container 18 than the standard amount (for example 200g to 400g) corresponding to the each type and size etc. of the tire 100 requiring repair by the sealing and pumping device 10. It should be noted that the liquid agent container 18 of the present exemplary embodiment is filled with the sealing agent 32 with no voids therein and without provision of an air space, however a small amount of an inert gas such as Ar or the like may be sealed together with the sealing agent 32 within the liquid agent container 18 when filling, in order to prevent alternation of the sealing agent 32 by oxidation etc..

When the sealing and pumping device 10 is in a state in which the liquid agent container 18 is positioned directly above the injection unit 20, the aluminum seal 30 of the liquid agent container 18 is in a pressure applied state due to the weight of the sealing agent 32 itself within the liquid agent container 18.

A unit main body portion 34 and a foot portion 36 are integrally provided in the injection unit 20, as shown in FIG. 3. The unit main body portion 34 is formed in a substantially circular bottomed cylinder shape, open toward the top, and the foot portion 36 is of a circular flange shape extending to the outer peripheral side from a portion at the bottom of the unit main body portion 34. The neck portion 26 is welded to the unit main body portion 34, by a method such as by inserting the bottom end of the neck portion 26 of the liquid agent container 18 into the unit main body portion 34, and spin welding the top face of the unit main body portion 34 to the step portion 28 of the neck portion 26.

A substantially circular column shaped liquid supply pressure chamber 40 is provided within the unit main body portion 34, when the aluminum seal 30 is ruptured the liquid supply pressure chamber 40 is in communication with the inside of the liquid agent container 18. A circular cylinder shaped inner peripheral tubular portion 42 is formed coaxially to the injection unit 20 at the peripheral inside of the unit main body portion 34. A jig insertion hole 44 is formed with a circular cross-section at a central portion of the inner peripheral tubular portion 42, passing through from the bottom end face of the injection unit 20 to the top end face of the inner peripheral tubular portion 42. An insertion fitting recess portion 46 is formed as a circular shaped recess to a central portion of the bottom end face of the injection unit 20, with the internal diameter of the insertion fitting recess portion 46 being larger than the internal diameter of the jig insertion hole 44. The bottom end of the jig insertion hole 44 thereby opens to the bottom face central portion of the insertion fitting recess portion 46.

As shown in FIG.3, an insertion guide face 48 is formed in a tapered shape to the inner peripheral surface of the jig insertion hole 44, with the internal diameter at the open end portion on the entry side reducing in diameter on progression from the open end further into the opening. The insertion guide face 48 is provided for guiding the leading end portion of a later described press jig 82 toward the far side of the jig insertion hole 44 when the press jig 82 is being inserted into the jig insertion hole 44.

As shown in FIG. 2, a high pressure hose 24 is provided to the sealing and pumping device 10, extending from the compressor unit 12 to the injection unit 20. A portion at one end of the high pressure hose 24 is connected to the air compressor in the compressor unit 12.

As shown in FIG 3, a circular cylindrical shaped air supply tube 52 is formed in the injection unit 20 extending from the outer peripheral face of the inner peripheral tubular portion 42 and passing through the unit main body portion 34 toward the outer peripheral side. The leading end portion at the outer peripheral side of the air supply tube 52 is connected to the leading end of the high pressure hose 24 through a nipple 54.

As shown in FIG 3, plural restricted portions 56 (two in the present exemplary embodiment) are provided at the base end portion of the air supply tube 52, piercing through the peripheral wall portion of the inner peripheral tubular portion 42 and communicating with the inside of the jig insertion hole 44.

The restricted portions 56 of the inner peripheral tubular portion 42 are formed as through holes each of circular cross-sectional shape, with a uniform internal diameter along the whole of their length, the internal diameter thereof being smaller than the internal diameter of the air supply tube 52. The inner peripheral ends of the restricted portions 56 are open at an intermediate portion of the inner peripheral face of the inner peripheral tubular portion 42, and form air supply apertures of circular shape in the inner peripheral face of the inner peripheral tubular portion 42.

The internal space within the high pressure hose 24, the air supply tube 52 and the restricted portions 56 configures an air supply path 60 for supplying compressed air from the air compressor to the liquid agent container 18 or to the tire 100.

An axial portion 63 of a boring member 62 is inserted into the jig insertion hole 44 at the liquid supply pressure chamber 40 side. A circular flange shaped hole piercing portion 64 is provided spreading out radially toward the outside at a portion at the top end of the axial portion 63. Blade portions 66 are formed at the outer peripheral edge of the top face of the hole piercing portion 64, the blade portions 66 formed as protrusion shapes for readily rupturing the aluminum seal 30. Annular shaped fitting insertion grooves are formed to the outer peripheral surface of the axial portion 63, at positions above and below the air supply ports 58 when the axial portion 63 is in an inserted-state within the jig insertion hole 44. Rubber O-rings 72 are fitted into the fitting insertion grooves.

When the axial portion 63 is in the inserted-state into the jig insertion hole 44, the outer peripheral edge portions of each of the pair of O-rings 72 are in contact and pressed by the inner peripheral surface of the jig insertion hole 44 along their entire circumference. The jig insertion hole 44 is thereby in a closely sealed state, with above and below the air supply ports 58 respectively closed off by the axial portion 63 and the pair of O-rings 72. In this state the axial portion 63 is retained within the jig insertion hole 44 by friction between the O-rings 72 and the inner peripheral surface of the jig insertion hole 44. In this state the leading end face of the hole piercing portion 64 directly faces the center of the aluminum seal 30, with there being a small gap present between the hole piercing portion 64 and the aluminum seal 30.

A circular cylindrical shaped air-liquid supply tube 74 is integrally formed in the injection unit 20 so as to penetrate through the peripheral wall of the unit main body portion 34, as shown in FIG 3. The base end portion of a joint hose 78 is connected through a nipple 76 to the leading end portion at the outer peripheral side of the air-liquid supply tube 74. A valve adapter 80, detachably connecting to a tire valve 102 of the tire 100, is provided at the leading end portion of the joint hose 78. The base end side of the air-liquid supply tube 74 is inserted into the liquid supply pressure chamber 40. The joint hose 78 is thereby in communication with the inside of the liquid supply pressure chamber 40 through the air-liquid supply tube 74.

The press jig 82, as shown in FIG. 3, is provided with a bar shaped insertion portion 84 and a circular flange shaped base portion 86 formed to one end of the insertion portion 84. A jig communication path 88 is formed in the insertion portion 84, the jig communication path 88 extending from the leading end face toward the base portion 86 side, branching at an intermediate portion into plural branches (for example 2 branches), with each branch extending out toward the outer peripheral side. An annular shaped communication groove 90 is formed in the outer peripheral surface of the insertion portion 84, forming an airway to the opening portions of the jig communication path 88.

A pair of fitting insertion grooves are formed respectively above and below the communication groove 90 in the outer peripheral surface of the insertion portion 84. O-rings 96 are respectively fitted into the pair of fitting insertion grooves. The O-rings 96 used are of the same dimension and material as of the O-rings 72 disposed in the boring member 62.

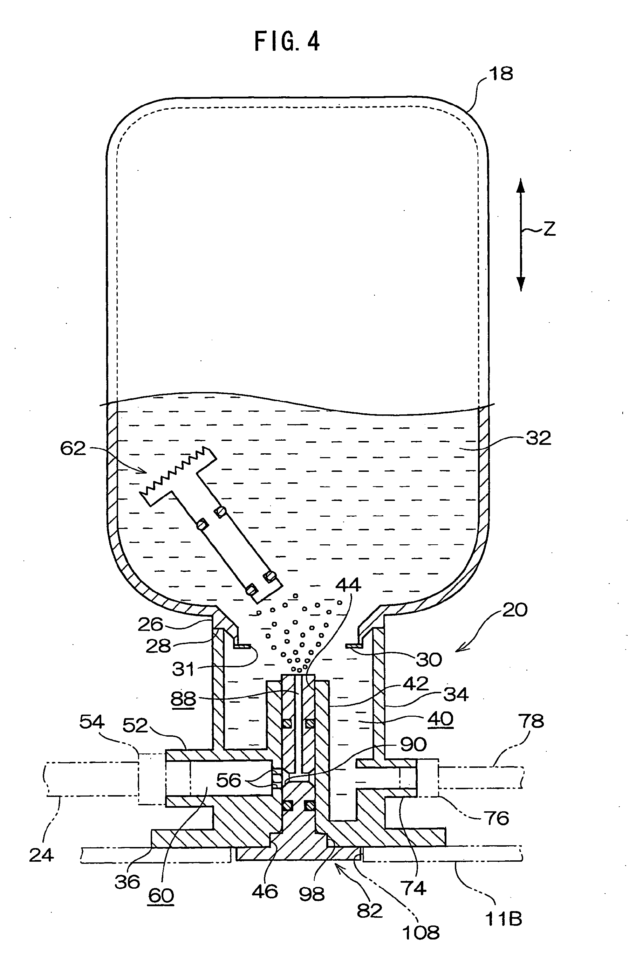

A fitting insertion projection portion 98 is integrally formed to the press jig 82, between the base end portion of the insertion portion 84 and the base portion 86, with a diameter larger than that of the insertion portion 84. The fitting insertion projection portion 98 has an external diameter and height corresponding to the internal diameter and depth of the insertion fitting recess portion 46 formed in the bottom end face of the injection unit 20. Thereby, as shown in FIG 4, the fitting insertion projection portion 98 fits inserted within the insertion fitting recess portion 46 when the whole of the insertion portion 84 is inserted within the jig insertion hole 44. In this state the press jig 82 is retained by friction, with the insertion portion 84 in an inserted state within the jig insertion hole 44, by the fitting insertion projection portion 98 being in a press-fit state, insertion fitted within the insertion fitting recess portion 46.

The length of the insertion portion 84 is slightly longer than the dimension from the bottom end of the jig insertion hole 44 up to the aluminum seal 30. Thereby, when the entire insertion portion 84 of the press jig 82 is inserted within the jig insertion hole 44, as shown in FIG. 4, the boring member 62 is securely pushed out from inside of the jig insertion hole 44, and the upper end portion of the press jig 82 is inserted into the liquid agent container 18. In the state in which the entire insertion portion 84 is inserted into the jig insertion hole 44, the communication groove 90 of the insertion portion 84 and the air supply ports 58 are aligned with each other along the axial direction. The air supply path 60 is thereby in communication with the jig communication path 88 of the press jig 82 through the communication groove 90.

The outer peripheral edge portions of each of the pair of O-rings 96 are pressed along the entire circumferential direction by the inner peripheral surface of the jig insertion hole 44 when the insertion portion 84 is in the inserted state within the jig insertion hole 44. The jig insertion hole 44 is thereby in a closely sealed state with both above and below the air supply ports 58 closed off by the insertion portion 84 and the pair of O-rings 96.

As shown in FIG 1, a groove 25 is formed in a front wall face 11F of the casing 11, for storing the joint hose 78 and the valve adapter 80. The joint hose 78 and the valve adapter 80 are usually fitted into and stored in the groove 25. A jig storage hole 19 is formed in the front wall face 11F for attaching the press jig 82, and the insertion portion 84 of the press jig 82 is usually stored in the jig storage hole 19.

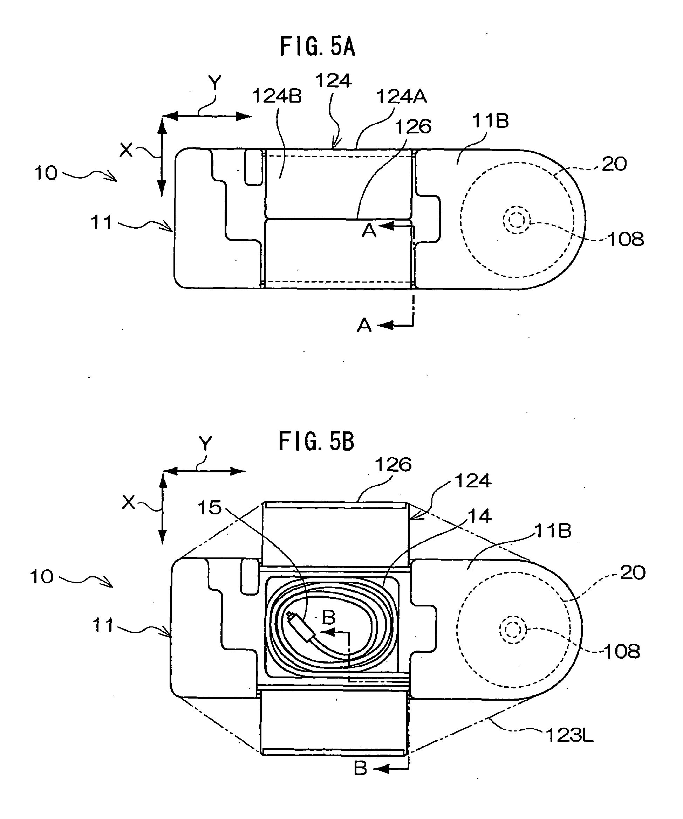

As shown in FIG. 5B, a storage recess 122 is formed in a bottom face 11B of the casing 11 for storing the power source cable 14 and the plug 15, and the power source cable 14 and the plug 15 are usually stored within the storage recess 122. A through hole 108 is provided in the bottom face 11B, connecting to the insertion fitting recess portion 46 of the injection unit 20. The diameter of the through hole 108 is larger than the external diameter of the base portion 86 of the press jig 82, as shown in FIG. 3 and FIG. 4. In the present exemplary embodiment the thickness of the bottom face 11B of the casing 11 is set thicker than the thickness of the base portion 86. The through hole 108 is normally closed off by a non-illustrated closure, and the closure is removed from the through hole 108 when the press jig 82 is inserted into the jig insertion hole 44.

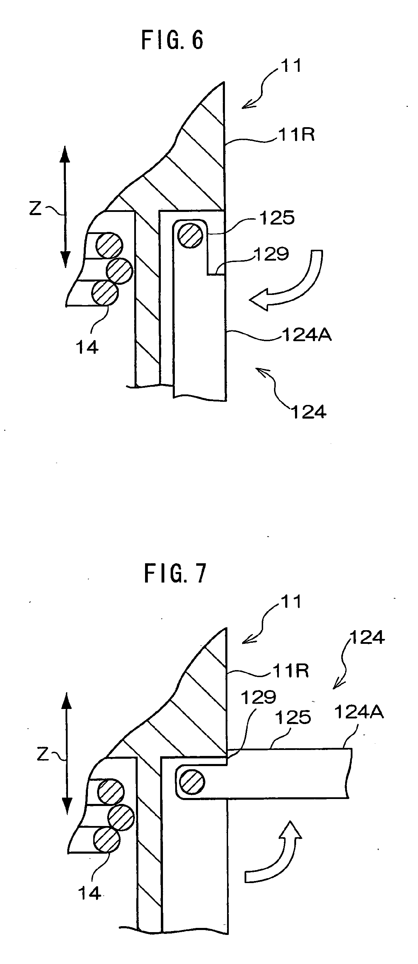

As shown in FIG 5A, a pair of lids 124 are provided in the casing 11 so as to cover the storage recess 122. The cross-sections of the lids 124 are substantially L-shaped, with outer faces 124A in one direction level with the wall face of the casing 11 or positioned further inside than the wall face, and the other outer faces 124B in the other direction level with the bottom face 11B of the casing 11 or positioned further inside than the bottom face 11B, with the end faces 126 in the other direction meeting each other. Shaft portions 125 are provided protruding in circular column shapes from both side faces 128 at the one direction side of the lids 124. The shaft portions 125 engage with non-illustrated shaft receiving portions provided to the casing 11, such that the rotational axes of the lids 124 are along the arrow Y direction. The lids 124 are thereby rotatably supported by the casing 11 (see FIG 6 and FIG 7).

The lids 124, as shown in FIG 5B and FIG 7, project out toward the outside (in the direction of arrow X here) of the casing 11 by being rotated about the shaft portions 125 as rotation axes (namely, by opening the lids 124). When the lids 124 are rotated until the end faces 126 in the other direction of the lids 124 are substantially level with the bottom face 11B, step portions 129 extending in the arrow Y direction that are provided to the outer face 124A at the one direction side of the lids 124, engage with the wall face of the casing 11, preventing the lids 124 from being opened beyond this point.

When the lids 124 are in the above described state in which the end faces 126 in the other direction meet each other, namely when the lids 124 are in a closed state, the lids 124 cover the storage recess 122 without projecting outside of the casing 11. When the lids 124 are in the state in which the step portions 129 are engaged with the wall face of the casing 11, the lids 124 project out to the outside from the casing 11 and the end faces 126 in the other direction are substantially level with a bottom face 126B.

### Operation of Sealing and Pumping Device

Explanation will now be given of the operational sequence when using the sealing and pumping device 10 of the present exemplary embodiment to repair a punctured tire 100. Explanation (in text and illustrations) of the following sequence (1) to (8) is given in the above mentioned operation manual 17.

(1) When a puncture occurs in the tire 100, an operator first removes the closure that is closing off the through hole 108, inserts the insertion portion 84 of the press jig 82 into the jig insertion hole 44 of the sealing and pumping device 10, and when the base portion 86 of the press jig 82 contacts the foot portion 36 of the injection unit 20, the fitting insertion projection portion 98 of the press jig 82 is pressed inside the insertion fitting recess portion 46 of the injection unit 20. The hole piercing portion 64 of the boring member 62, which is being pressed by the insertion portion 84, ruptures the aluminum seal 30 and is pressed inside the container, with the insertion portion 84 progressing into the container.

The press jig 82 is moved further into the jig insertion hole 44 from the entrance side thereof, while the pair of O-rings 96 disposed at the outer peripheral face of the insertion portion 84 press against the inner peripheral face of the jig insertion hole 44. Part way through this movement the O-ring 96 disposed at the top of the insertion portion 84 is made to pass to the inner peripheral side of the air supply ports 58. The boring member 62 is also moved so that the axial portion 63 moves from inside the jig insertion hole 44 to the exit end side thereof, while the pair of O-rings 96 disposed on the outer peripheral face of the axial portion 63 press against the inner peripheral face of the jig insertion hole 44. Part way through this movement the O-ring 72 disposed at the bottom of the axial portion 63 is made to pass to the inner peripheral side of the air supply ports 58.

(2) Next, the lids 124 on both sides of the casing 11 are opened, and the sealing and pumping device 10 is placed, for example, on a road surface so that the foot portion 36 is at the bottom and the liquid agent container 18 is at the top (the upright state, see FIG. 1 to FIG. 3). The power source cable 14 stored in the storage recess 122 is pulled out at this stage.

When the insertion portion 84 of the press jig 82 has been inserted within the jig insertion hole 44 of the injection unit 20, as shown in FIG 4, the leading end of the insertion portion 84 projects out from the leading end of the inner peripheral tubular portion 42, and faces a hole 31 opened in the aluminum seal 30 by the boring member 62. The sealing agent 32 in the liquid agent container 18 flows out into the liquid supply pressure chamber 40 through the hole 31.

(3) Next, the joint hose 78 is pulled out from the groove 25, and the valve adapter 80 of the joint hose 78 is connected to the tire valve 102 of the tire 100 (see FIG. 2), communicating the liquid supply pressure chamber 40 with the inside of the tire 100 through the joint hose 78.

(4) The plug 15 is inserted into a socket, such as a socket of a cigarette lighter installed in a vehicle.

(5) The engine of the vehicle is turned on.

(6) The power switch 13 is switched on, and the compressor unit 12 is actuated. The compressed air generated by the compressor unit 12 is supplied into the liquid agent container 18 through the high pressure hose 24, the air supply path 60, and the jig communication path 88 (see FIG 4).

When compressed air is fed into the liquid agent container 18, the compressed air rises to the top of the sealing agent 32 within the liquid agent container 18, and a space (air layer) is formed in the liquid agent container 18 above the sealing agent 32. The sealing agent 32, pushed by the compressed air from the air layer, is fed into the liquid supply pressure chamber 40 through the hole 31 opened in the aluminum seal 30, and injected from within the liquid supply pressure chamber 40 into the pneumatic tire 100 through the joint hose 78.

Note that after all of the sealing agent 32 in the liquid agent container 18 has been expelled, the sealing agent 32 in the liquid supply pressure chamber 40 is pressurized and pushed through the joint hose 78 and fed into the pneumatic tire 100. Then when all of the sealing agent 32 has been ejected from the liquid supply pressure chamber 40 and the joint hose 78, compressed air is injected into the tire 100 through the liquid supply pressure chamber 40 and the joint hose 78.

Next, when an operator has confirmed with the pressure gauge 16 that the internal pressure of the tire 100 is the stipulated pressure, then the power switch 13 is switched off and the compressor unit 12 halted, and the valve adapter 80 is removed from the tire valve 102.

Within a specific period of time after finishing inflating the tire 100 the operator performs preparatory running of the tire by traveling a specific distance (for example 10km) using the sealing agent 32 injected tire 100. The sealing agent 32 within the tire 100 thereby spreads out-uniformly, the sealing agent 32 fills the puncture hole and seals the puncture hole.

(8) After completing preparatory running, the operator connects the valve adapter 80 of the joint hose 78 to the tire valve 102 of the tire 100, as shown in FIG 2, and re-measures the internal pressure of the tire 100 using the pressure gauge 16. If the stipulated pressure is not met, then the compressor unit 12 is re-actuated and the tire 100 is pressurized to the stipulated internal pressure. Puncture repair of the tire 100 is thereby completed and it is possible to drive using the tire 100 within a specific distance range while not exceeding a specific speed (for example not exceeding 80 km/h).

In the sealing and pumping device 10 of the present exemplary embodiment, the lids 124 project out from both outside edges of the casing 11 by rotating the lids 124, and by placing the casing 11 on the road surface in this state, the end faces 126 in the other direction of the lids 124 contact the road surface. The shape of contact with the ground of the casing 11 is then larger than prior to projecting out the lids 124. More precisely the ground contact shape is widened in the arrow X direction, in the width direction of the casing 11. For example, if a casing is placed on a surface supported at 3 points, then the casing becomes more difficult to tip over in a given direction, the greater the separation distance in this direction between imaginary lines connecting these 3 points and a vertical line down from the center of gravity of the casing. The sense of stability of the casing 11 is increased and tipping over is suppressed due to the ground contact shape in the arrow X direction being widened by the lids 124 in the thin casing 11. The double-dot broken lines 123L in FIG 5B represent imaginary lines connecting between the support points of the casing 11.

By closing the lids 124, the lids 124 are made so as not to project outside from the casing 11, so there is no concern of detriment to the space saving characteristics of the casing 11 due to the lid 124, and storage space within a vehicle can be effectively utilized by, for example, storing the casing 11 in this state in the vehicle.
Consequently, the sealing and pumping device 10 can suppress tipping over while also maintaining space saving characteristics.

Since the lids 124 are utilized both as lids of the storage recess 122 of the casing 11 for storing the power source cable 14, and as tipping suppression members for suppressing tipping over of the casing 11, the number of components of the sealing and pumping device 10 is reduced, and a reduction in cost is achieved.
In addition, since the lids 124 are rotatably supported on the casing 11, there is no concern of the lids 124 being lost or the like.

In the present exemplary embodiment, the pair of lids 124 are rotatably supported on the casing 11 by engagement of the shaft portions 125 with shaft receiving portions, however there is no limitation so such a configuration, and any method of engagement may be utilized as long as the lids 124 are rotatably supported on casing 11. For example, a hinge or the like may be employed for rotatably supporting the lids 124 on the casing 11. There may also be a single lid 124 or plural lids 124, depending on the shape of the casing 11.

Furthermore, in the present exemplary embodiment, the joint hose 78 is stored within the groove 25, however, for example, configuration may be made in which the joint hose 78 is stored in the storage recess 122, and when using the sealing and pumping device 10, the lids 124 on both sides are opened and the joint hose 78 is pulled out together with the power source cable 14.

### Second Exemplary Embodiment

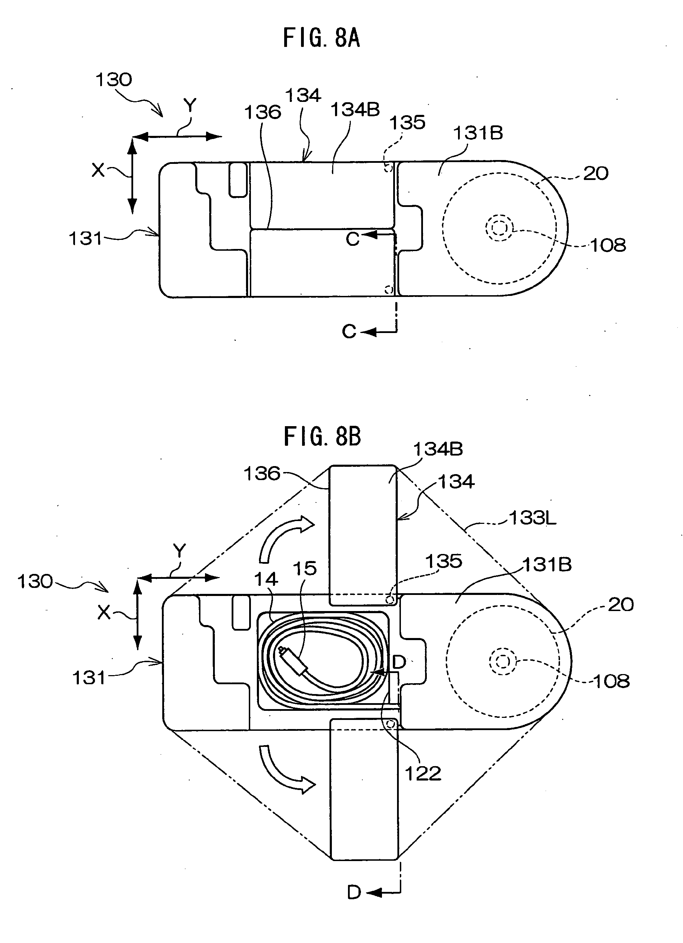

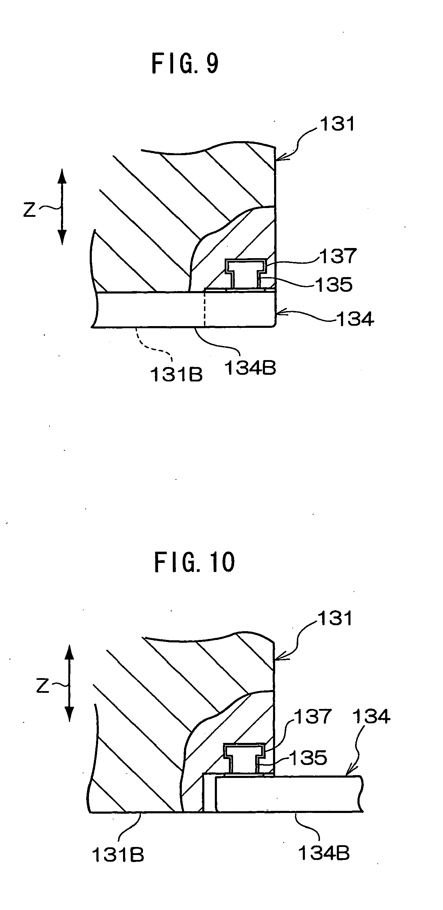

Explanation will now be given of a second exemplary embodiment of a sealing and pumping device of the present invention, with reference to FIGS. 8 and FIG 10. Since the sealing and pumping device 130 of the second exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.

As shown in FIG. 8A, a pair of lids 134 is provided covering a storage recess 122 in a casing 131. The lids 134 are of a plate shape, and one end face thereof, at the outside in the arrow X direction, is level with the wall face of the casing 131 or is positioned further inside than this wall face, a bottom face 134B thereof, at the bottom in the arrow Z direction, is level with a bottom face 131B of the casing 131, and the other end faces 136 at the inside in the arrow X direction meet each other. Substantially circular column shaped shafts 135 are provided at the corner portions formed at the outside in the arrow X direction of the top face, at the top side in the arrow Z direction, of the lids 134 and at the center side in the arrow Y direction, the shafts 135 projecting upward from the top face. The shafts 135 engage with shaft receiving portions 137 provided on the casing 131, such that rotational axes of the lids 134 are along the arrow Z direction. The lids 134 are thereby rotatably supported on the casing 131 (see FIG. 9 and FIG 10).

As shown in FIG 8B and FIG 10, the lids 134 are made to project outside (the arrow X direction in this case) from the casing 131 by rotating the lids 134 about the rotational axes of the shafts 135 (namely, by opening the lids 134). When the lids 134 are rotated until the other end faces 136 of the lids 134 are positioned substantially orthogonal to the arrow Y direction, the lids 134 are prevented from rotating by non-illustrated stoppers so as not to open any further.

Explanation will now be given of the operation of the second exemplary embodiment. In the sealing and pumping device 130 of the present exemplary embodiment, the lids 134 are made to project out to the outside on both sides of the casing 131 by rotating the lids 134 and opening out to both sides. The bottom faces 134B of the lids 134 have ground contact with the road surface by placing the casing 131 on the road surface in this state. The ground contact shape of the casing 131 becomes larger at this time than prior to projecting the lids 134 out. More precisely the ground contact shape in the arrow X direction is wider. The sense of stability of the casing 131 is increased and tipping over is suppressed. Note that the double-dot broken lines 133L in FIG 8B show imaginary lines connecting between the support points of the casing 131.

Since by closing the lids 134 the lids 134 are made so as not to project out to the outside from the casing 131, there is also no concern of detriment to the space saving characteristics of the casing 131 due to the lids 134, and storage space within a vehicle can be effectively utilized by, for example, storing the casing 131 in this state in the vehicle. Consequently, the sealing and pumping device 130 can suppress tipping over while also maintaining space saving characteristics. Since the lids 134 are utilized both as lids of the storage recess 122 of the casing 131 for storing the power source cable 14, and as tipping suppression members for suppressing tipping over of the casing 131, the number of components of the sealing and pumping device 130 is reduced, and a reduction in cost is achieved. In addition, since the lids 134 are rotatably supported on the casing 131, there is no concern of the lids 134 being lost or the like.

### Third Exemplary Embodiment

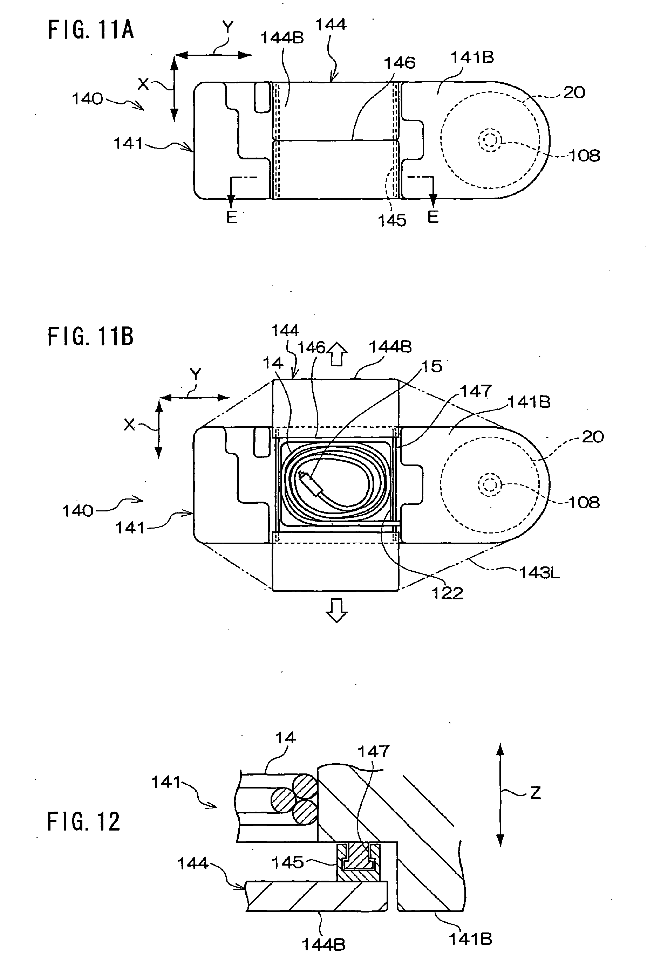

Explanation will now be given of a third exemplary embodiment of a sealing and pumping device of the present invention, with reference to FIGS. 11 and FIG. 12. Since the sealing and pumping device 140 of the third exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.

As shown in FIG. 11A, a pair of lids 144 is provided covering a storage recess 122 in a casing 141. The lids 144 are of a plate shape, and one end face thereof at the outside in the arrow X direction is level with the wall face of the casing 141 or is positioned further inside than this wall face, a bottom face 144B thereof at the bottom in the arrow Z direction is level with a bottom face 141B of the casing 141, and the other end faces 146 thereof at the inside in the arrow X direction meet each other. Slide receiving portions 145 are provided at portions at both sides in the arrow Y direction of a top face at the top side of the lid 144 in the arrow Z direction, with the slide receiving portions 145 projecting upward in the arrow Z direction from the top face. The slide receiving portions 145 are engaged with slide rails 147 provided below the casing 141, such that the sliding direction of the lids 144 is along the arrow X direction. The lids 144 are thereby slidably supported on the casing 141 (see FIG 12).

The lids 144 are made to project outside (the arrow X direction in this case) from the casing 141 by sliding the lids 144 along the slide rails 147 (namely, by opening the lids 144), as shown in FIG. 11B and FIG. 12. When the lids 144 have been slid a certain amount in the arrow X direction, the lids 144 are prevented from sliding in the arrow X axis direction, so as not to open any further, by non-illustrated stoppers provided so that the slide receiving portions 145 do not come out of the slide rails 147.

Explanation will now be given of the operation of the third exemplary embodiment. In the sealing and pumping device 140 of the present exemplary embodiment, the lids 144 are made to project out to the outside on both sides of the casing 141 by sliding the lids 144 and opening out to both sides. The bottom faces 144B of the lids 144 have ground contact with the road surface by placing the casing 141 on the road surface in this state. The ground contact shape of the casing 141 becomes larger at this time than prior to projecting the lids 144 out. More precisely the ground contact shape in the arrow X direction is wider. The sense of stability of the casing 141 is therefore increased and tipping over is suppressed. Note that the double-dot broken lines 143L in FIG. 11B show imaginary lines connecting between the support points of the casing 141.

Since by closing the lids 144, the lids 144 are made so as not to project out to the outside from the casing 141, there is also no concern of detriment to the space saving characteristics of the casing 141 due to the lids 144, and storage space within a vehicle can be effectively utilized by, for example, storing the casing 141 in this state in the vehicle. Consequently, the sealing and pumping device 140 can suppress tipping over while also maintaining space saving characteristics. Since the lids 144 are utilized both as lids of the storage recess 122 of the casing 141 for storing the power source cable 14, and as tipping suppression members for suppressing tipping over of the casing 141, the number of components of the sealing and pumping device 140 is reduced, and a reduction in cost is achieved. In addition, since the lids 144 are slidably supported on the casing 141, there is no concern of the lids 144 being lost or the like.

### Fourth Exemplary Embodiment

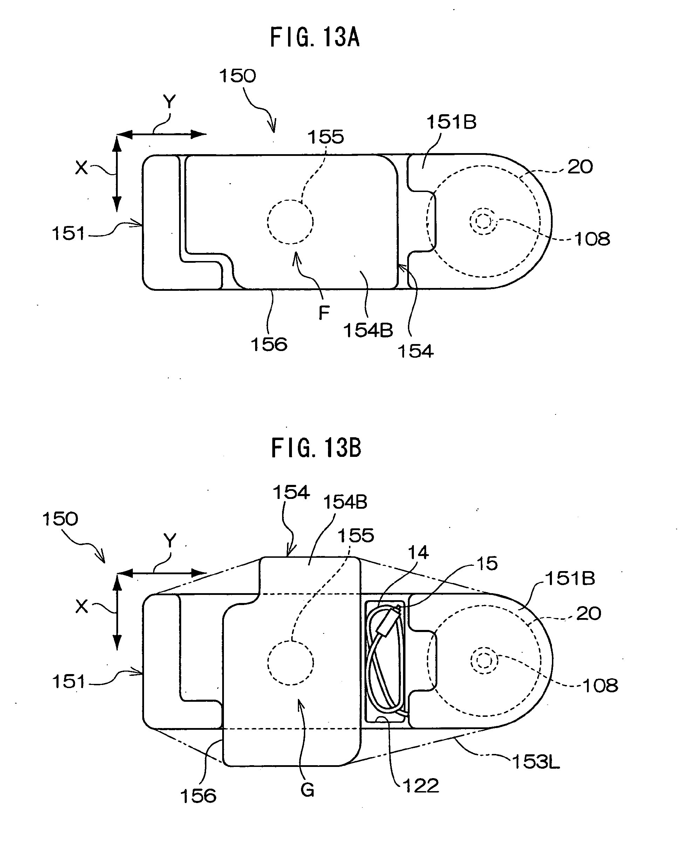

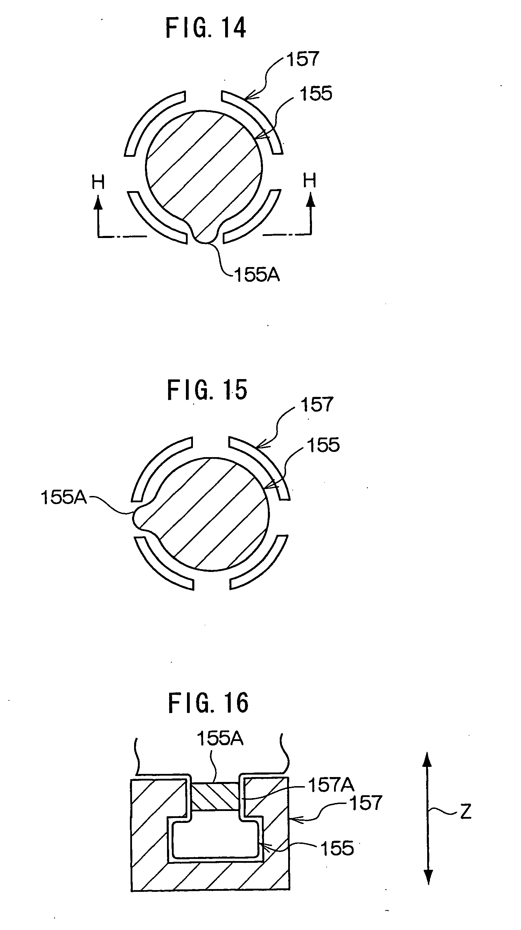

Explanation will now be given of a fourth exemplary embodiment of a sealing and pumping device of the present invention, with reference to FIGS. 13 and FIG 16. Since the sealing and pumping device 150 of the third exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.

As shown in FIG 13A, a lid 154 is provided covering a storage recess 122 in a casing 151. The lid 154 is of a plate shape, and both end faces at the outside in the arrow X direction are level with the wall faces of the casing 151 or are positioned further inside than these wall faces, a bottom face 154B at the bottom in the arrow Z direction is level with a bottom face 151B of the casing 151. A substantially circular column shaped shaft 155 is provided to the top face that is upward in the arrow Z direction of the lid 154 and towards the center of the top face in the arrow Y direction and the arrow X direction, the shaft 155 projecting upward from the top face. The shaft 155 is engaged with a substantially circular column shaped shaft receiving portion 157 provided below the casing 151, such that the rotational axis direction of the lid 154 is along the arrow Z direction. The shaft 155 has a projecting portion 155A projecting in a direction orthogonal to the axial direction of the shaft 155, and the shaft receiving portion 157 is divided into four sections around its circumference at the top side thereof, with the projecting portion 155A fitting into the four divided portions 157A. When the lid 154 is rotated the projecting portion 155A comes out from one of the divided portions 157A and moves around to the next divided portion 157A. The lid 154 is thereby rotatably supported on the casing 151 (see FIG. 14 to FIG. 16).

As shown in FIG. 13B, the slide receiving portions 154 is made to project outside (the arrow X direction in this case) from the casing 151 by rotating the lid 154 about the shaft 155 as the rotational axis. When this occurs, an end face 156 at another side, the rear side in the arrow X direction of the lid 154, is prevented by the stopper of the casing 151 from allowing the lid 134 to rotate any further.

Explanation will now be given of the operation of the fourth exemplary embodiment. In the sealing and pumping device 150 of the present exemplary embodiment, the lid 154 is made to project out to the outside on both sides of the casing 151 by rotating the lid 154 as shown in FIG. 13B. The bottom face 154B of the lid 154 has ground contact with the road surface by placing the casing 151 on the road surface in this state. The ground contact shape of the casing 151 becomes larger at this time than prior to projecting the lid 154 out. More precisely the ground contact shape in the arrow X direction is wider. The sense of stability of the casing 151 is increased and tipping over is suppressed. Note that the double-dot broken lines 153L in FIG. 13B show imaginary lines connecting between the support points of the casing 151.

Since by rotating the lid 154 as shown in FIG 13A, the lid 154 is made so as not to project out to the outside from the casing 151, there is also no concern of detriment to the space saving characteristics of the casing 151 due to the lid 154, and storage space within a vehicle can be effectively utilized by, for example, storing the casing 151 in this state in the vehicle. Consequently, the sealing and pumping device 150 can suppress tipping over while also maintaining space saving characteristics. Since the lid 154 is utilized both as a lid of the storage recess 122 of the casing 151 for storing the power source cable 14, and as tipping suppression members for suppressing tipping over of the casing 151, the number of components of the sealing and pumping device 150 is reduced, and a reduction in cost is achieved. In addition, since the lid 154 is rotatably supported on the casing 151, there is no concern of the lid 154 being lost or the like.

### Fifth Exemplary Embodiment

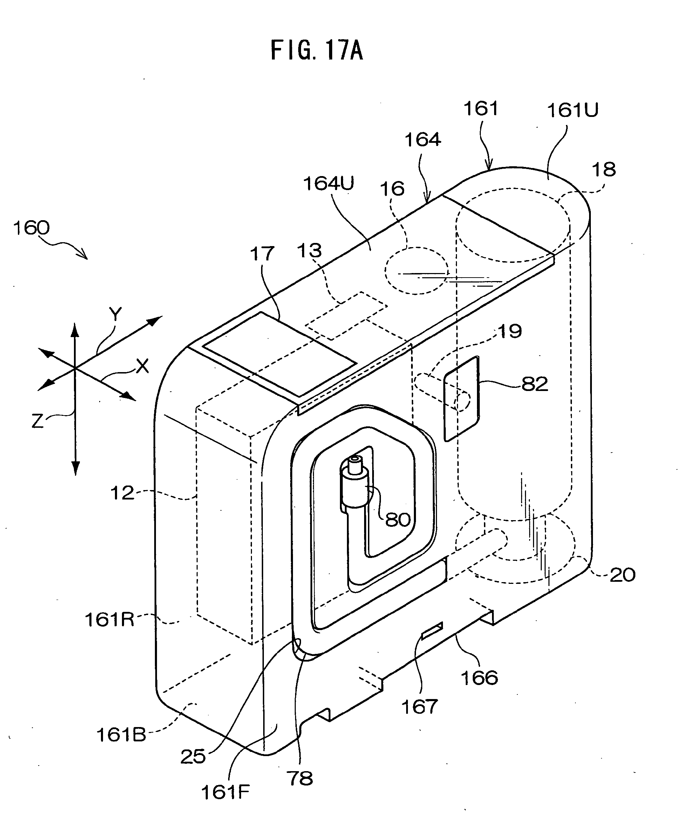

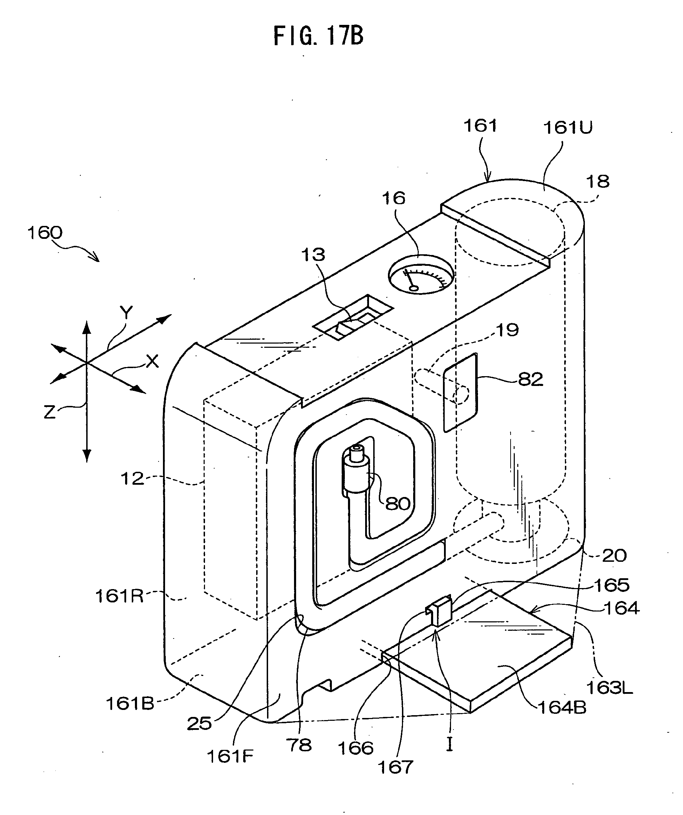

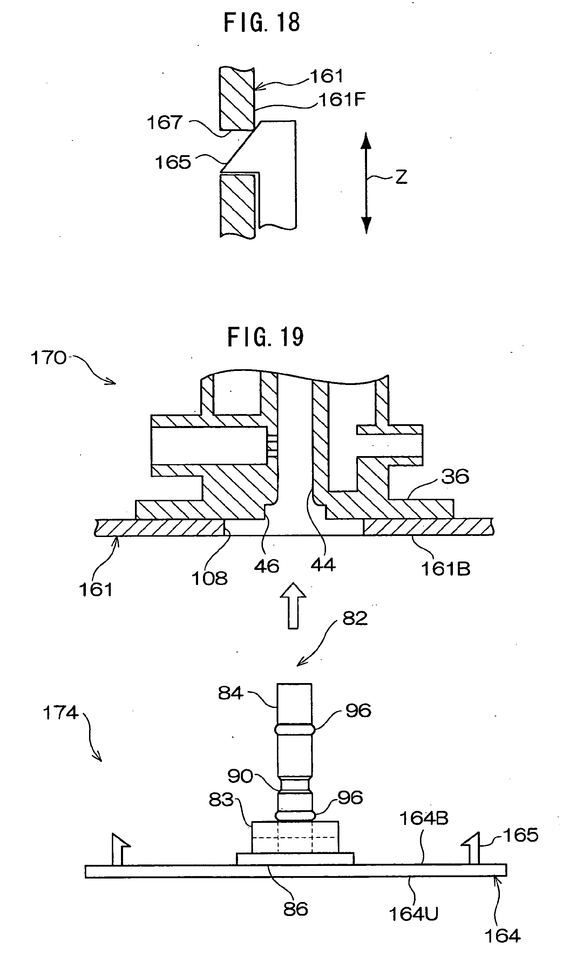

Explanation will now be given of a fifth exemplary embodiment of a sealing and pumping device of the present invention, with reference to FIGS. 17A, FIG 17B and FIG. 18. Since the sealing and pumping device 160 of the fifth exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.

As shown in FIG 17A, a lid 164 is detachably mounted to a top face 161U of a casing 161, covering a power switch 13 and a pressure gauge 16. The length of the lid 164 is longer in the arrow Y direction than the length in the arrow X direction, and when in a mounted state to the top face 161U becomes integrated to the casing 161, and configures a portion of the top face 161U. An operation manual 17 is provided to a top face 164U of the lid 164. A groove portion 166 is provided to a bottom face 161B of the casing 161, the groove portion 166 extending along the arrow X direction with a groove width of the groove portion 166 (length in the arrow Y direction) that is set longer than the length in the arrow X direction of the lid 164, and a depth of the groove portion 166 (length in the arrow Z direction) the same as the thickness of the lid 164.

As shown in FIG. 17B, the lid 164 is removed from the casing 161 and in a top-bottom inverted state the lid 164 is fitted into the groove portion 166. When this occurs, a pair of tabs 165, projecting out in the arrow Z direction from a bottom face 164B of the lid 164, engage with a pair of small openings 167, provided further up in the arrow Z direction than each of the wall faces of the groove portion 166 of the casing 161, and the casing 161 and the lid 164 are integrated together.

In the present exemplary embodiment, the power source cable 14 and the plug 15 are stored in a non-illustrated recessed portion formed in a rear wall face 161 R of the casing 161.

Explanation will now be given of the operation of the fifth exemplary embodiment. In the sealing and pumping device 160 of the present exemplary embodiment, the lid 164 is made to project out to the outside on both sides of the casing 161 by removing the lid 164 from the top face 161 U and fitting the lid 164 into the groove portion 166. The top face 164U of the lid 164 has ground contact with the road surface by placing the casing 161 on the road surface in this state. The ground contact shape of the casing 161 becomes larger at this time than prior to mounting the lid 164. More precisely the ground contact shape in the arrow X direction is wider. The sense of stability of the casing 161 is increased and tipping over is suppressed. Note that the double-dot broken lines 163L in FIG. 17B show imaginary lines connecting between the support points of the casing 161.

By mounting the lid 164 in the top face 161U, as shown in FIG 17A, the lid 164 is made so as not to project out to the outside from the casing 161, there is therefore no concern of detriment to the space saving characteristics of the casing 161 due to the lid 164, and storage space within a vehicle can be effectively utilized by, for example, storing the casing 161 in this state in the vehicle. Consequently, the sealing and pumping device 160 can suppress tipping over while also maintaining space saving characteristics. Since the lid 164 is utilized both as a lid for the top face of the casing 161, and as a tipping suppression member for suppressing tipping over of the casing 161, the number of components of the sealing and pumping device 160 is reduced, and a reduction in cost is achieved. In addition, since it is necessary to remove the lid 164 from the top face, mis-operation of the present device by a user is prevented because when the lid is removed the user will read the operation manual 17.

### Sixth Exemplary Embodiment

Explanation will now be given of a sixth exemplary embodiment of a sealing and pumping device of the present invention, with reference to FIG. 19. Similar parts of the configuration to those of the first exemplary embodiment, are allocated the same reference numerals and explanation thereof is omitted. The sealing and pumping device 170 of the present exemplary embodiment, as shown in FIG 19, differs from the standpoint that a lid 174 is employed that has been configured by attaching the press jig 82 to the bottom face of the lid 164 detachably mounted to the top face 161U of the casing 161 used in the fifth exemplary embodiment, in the standpoint that the liquid agent container 18 and the injection unit 20 are disposed in the vicinity of the center of the casing 161, and in the standpoint that the jig storage hole 19 is configured at the top face side of the casing 171.

Explanation will now be given of the operation of the sixth exemplary embodiment. In the sealing and pumping device 170 of the sixth exemplary embodiment, as well as obtaining similar actions and effects to those in the fifth exemplary embodiment, the sense of stability is raised when inserting the press jig 82 into the jig insertion hole 44.

### Seventh Exemplary Embodiment

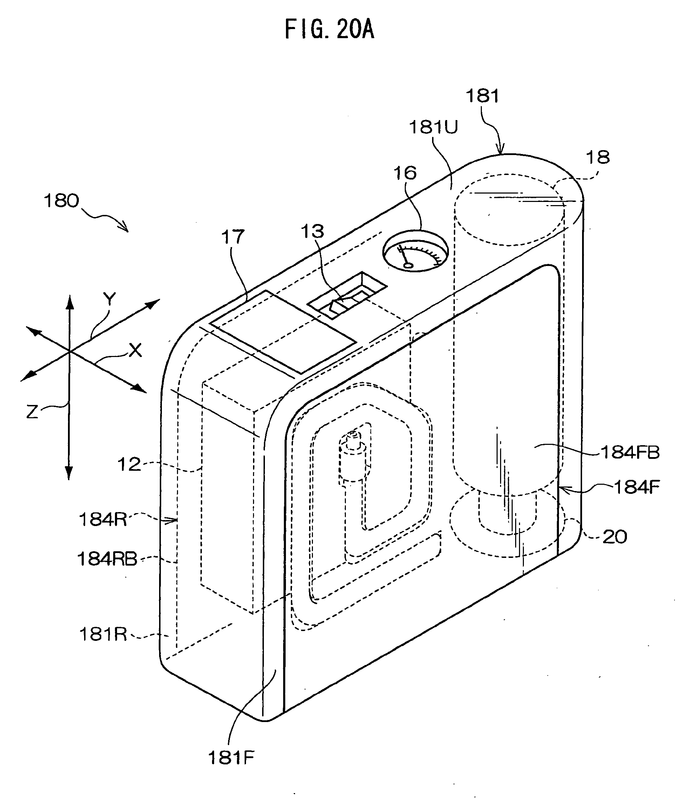

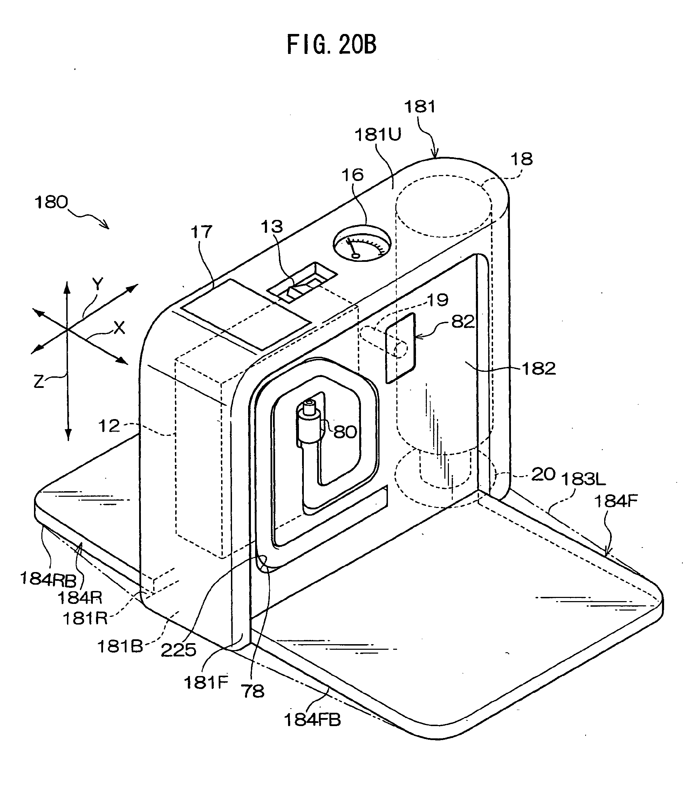

Explanation will now be given of a seventh exemplary embodiment of a sealing and pumping device of the present invention, with reference to FIGS. 20A and FIG 20B. Since the sealing and pumping device 180 of the seventh exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.

As shown in FIG 20B, a storage recess 182F is formed in a front wall face 181 F of a casing 181, with a groove 225 formed in a bottom face of the storage recess 182F, and usually the joint hose 78 and the valve adapter 80 are stored in the groove 225. A lid 184F of a plate shape is provided to the front wall face 181F so as to close off the storage recess 182F, as shown in FIG. 20A. An outside face 184FB of the lid 184F is level with the front wall face 181 F or positioned further inside than the front wall face 181F. The lid 184F has non-illustrated circular column shaped shaft portions projecting out along the arrow Y direction at side faces at the bottom side in the arrow Z direction of the lid 184F. The shaft portions engage with shaft receiving portions provided so as to face groove walls of the storage recess 182F of the casing 181. The lid 184F is thereby rotatably supported about the shaft portion as the rotational axis.

A non-illustrated storage recess 182R is formed in a rear wall face 181R of the casing 181, the storage recess 182R being of about the same size as the storage recess 182F, and a power source cable 14 and a plug 15 are usually stored in the storage recess 182R. A plate shaped lid 184R is provided to the rear wall face 181 R so as to close of the storage recess 182R. An outside face 184RB of the lid 184R is level with the rear wall face 181 R or is positioned further to the inside than the rear wall face 181R. The lid 184R has non-illustrated shaft portions formed in a circular column shape projecting along the arrow Y direction at side faces of the bottom side in the arrow Z direction of the lid 184R. The shaft portions engage with shaft receiving portions provided so as to face groove walls of the storage recess 182R of the casing 181. The lid 184R is thereby rotatably supported about the shaft portion as the rotational axis.

As shown in FIG. 20B, the lid 184F and the lid 184R are made to project outside (in the arrow X direction here) from both sides of the casing 181 by being rotated about their respective shaft portions as the rotational axis (namely, by opening the lids). When the lid 184F and the lid 184R are rotated up to a position where the outside face 184FB of the lid 184F and the outside face 184RB of the lid 184R are substantially level with the bottom face 11B, the lid 184F and the lid 184R are held in this state by non-illustrated stoppers. The lid 184F and the lid 184R become rotatable by releasing these stoppers. Note that the rotational structures for rotatably supporting the lid 184F and the lid 184R are similar to the rotational structures of the first exemplary embodiment.

### Explanation will now be given of the operation of the seventh exemplary embodiment.

In the sealing and pumping device 180 of the present exemplary embodiment, the lid 184F and the lid 184R are made to project outside from the casing 181 by rotating and opening the lid 184F and the lid 184R. The outside face 184FB of the lid 184F and the outside face 184RB of the lid 184R have ground contact with the road surface by placing the casing 181 on the road surface in this state. The ground contact shape of the casing 181 becomes larger at this time than prior to projecting out the lid 184F and the lid 184R. More precisely the ground contact shape in the arrow X direction is wider. The sense of stability of the casing 181 is increased and tipping over is suppressed. Note that the double-dot broken lines 183L in FIG 20B show imaginary lines connecting between the support points of the casing 181.

Since by closing the lid 184F and the lid 184R, the lid 184F and the lid 184R are made so as not to project out to the outside from the casing 181, there is also no concern of detriment to the space saving characteristics of the casing 181 due to the lid 184F and the lid 184R, and storage space within a vehicle can be effectively utilized by, for example, storing the casing 181 in this state in the vehicle. Consequently, the sealing and pumping device 180 can suppress tipping over while also maintaining space saving characteristics. Since the lid 184F and the lid 184R are utilized both as lids for the storage recess 182F and the storage recess 182R of the casing 181, and as tipping suppression members for suppressing tipping over of the casing 181, the number of components of the sealing and pumping device 180 is reduced, and a reduction in cost is achieved. In addition, since the lid 184F and the lid 184R are rotatably supported on the casing 181 there is no concern of the lid 184F and the lid 184R being lost or the like.

### Eighth Exemplary Embodiment

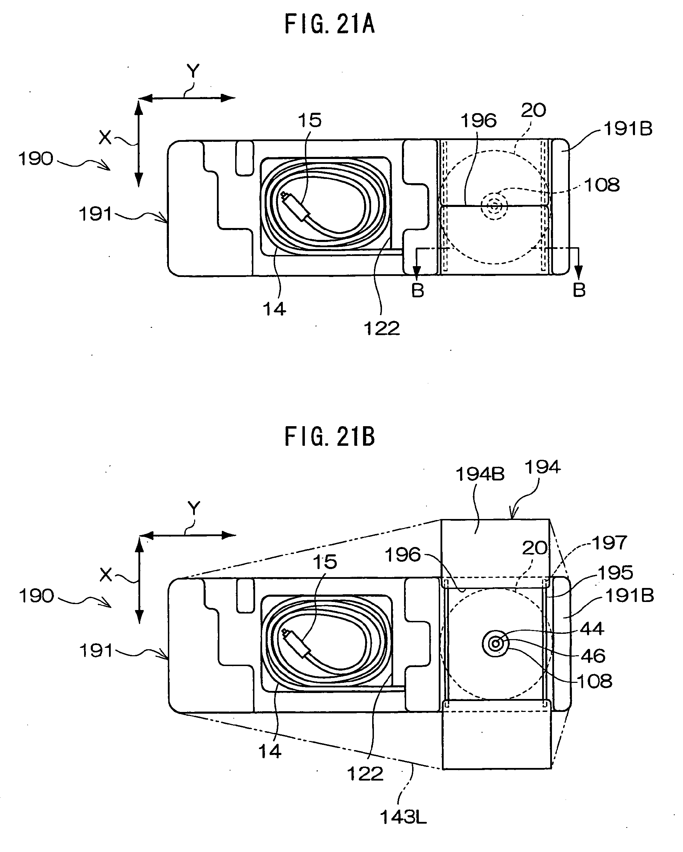

Explanation will now be given of an eighth exemplary embodiment of a sealing and pumping device of the present invention, with reference to FIG. 21. Since the sealing and pumping device 190 of the eighth exemplary embodiment differs from the sealing and pumping device 10 of the first exemplary embodiment from the standpoint of the tipping over suppressing structure, only the tipping over suppressing structure will be explained below. Similar parts of the configuration to those of the first exemplary embodiment, are allocated the same reference numerals and explanation thereof is omitted.
As shown in FIG 21A, a pair of lids 194 is provided at a bottom face 191 B of a casing 191, covering a through hole 108 at the bottom side of an injection unit 20. The lids 194 are of a plate shape, and one end face at the outside in the arrow X direction is level with the wall face of the casing 191 or is positioned further inside than this wall face, a bottom face 194B at the bottom in the arrow Z direction is level with a bottom face 141B of the casing 191, and the other end faces 196 at the inside in the arrow X direction meet each other. Slide receiving portions 195 are provided at portions at both sides in the arrow Y direction of a top face at the top side of the lid 194 in the arrow Z direction, with the slide receiving portions 195 projecting upward in the arrow Z direction from the top face.

The slide receiving portions 195 are engaged with slide rails 197 provided below the casing 191, such that the sliding direction of the lids 194 is along the arrow X direction. The lids 194 are thereby slidably supported on the casing 191.

As shown in FIG 20B, the lids 194 are made to project outside (the arrow X direction in this case) from the casing 191 by sliding the lids 194 along the slide rails 197 (namely, by opening the lids 194). When the lids 194 have been slid a certain amount in the arrow X direction, the lids 194 are prevented from sliding in the arrow X axis direction, so as not to open any further, by a non-illustrated stopper provided so that the slide receiving portions 195 do not come off the slide rails 197. The through hole 108 is appeared by opening the lids 194. The structure for making the lid 194 slidable is similar to that employed at the slidable structure of the third exemplary embodiment.

Explanation will now be given of the operation of the eighth exemplary embodiment. In the sealing and pumping device 190 of the present exemplary embodiment, the lids 194 are made to project out to the outside on both sides of the casing 191 by sliding the lids 194 and opening out to both sides. The bottom faces 194B of the lids 194 have ground contact with the road surface by placing the casing 191 on the road surface in this state. The ground contact shape of the casing 191 becomes larger at this time than prior to projecting the lids 194 out. More precisely the ground contact shape in the arrow X direction is wider. The sense of stability of the casing 191 is increased and tipping over is suppressed. Note that the double-dot broken lines 193L in FIG. 21B show imaginary lines connecting between the support points of the casing 191.

By closing the lids 194, the lids 194 are made so as not to project out to the outside from the casing 191, there is therefore no concern of detriment to the space saving characteristics of the casing 191 due to the lids 194, and storage space within a vehicle can be effectively utilized by, for example, storing the casing 191 in this state in the vehicle. Consequently, the sealing and pumping device 190 can suppress tipping over while also maintaining space saving characteristics. Since the lids 194 are utilized both as lids covering the through hole 108, and as tipping suppression members for suppressing tipping over of the casing 191, the number of components of the sealing and pumping device 190 is reduced, and a reduction in cost is achieved. In addition, since the lids 194 are slidably supported on the casing 191, there is no concern of the lids 194 being lost or the like.

Furthermore, since the through hole 108 is usually covered by the lids 194, the lids 194 need to be opened in order to insert the press jig 82 into the jig insertion hole 44. Consequently, when placing the casing 191 on the road surface, placement is made with the lid 194 assuredly in the open state.

Also, while in the eighth exemplary embodiment the lids 194 are of a slidable structure, there is no limitation to such a configuration, and for example configuration may be made with a double door structure employed for the lids 194, as utilized in the first exemplary embodiment.

### Other Exemplary Embodiments

In the first to the fourth and the seventh and eighth exemplary embodiments the member(s) used for tipping over suppressing were each configured so as to be slidably supported or rotationally supported. However there is no limitation to such configurations, and these members may be configured as detachably mounted members.

### Explanation of the Reference Numerals

- 10: sealing and pumping device 10
- 11: casing (case) 11
- 14: power source cable 14
- 17: operation manual 17
- 18: liquid agent container 18
- 20: injection unit 20
- 24: high pressure hose (air supply path) 24
- 30: aluminum seal (closure member) 30
- 32: sealing agent 32
- 32A: liquid surface 32A
- 40: liquid supply pressure chamber 40
- 44: jig insertion hole 44
- 50: air hose (air supply tube) 50
- 62: boring member 62
- 78: joint hose (air and liquid supply tube) 78
- 82: press jig 82
- 100: tire 100
- 122: storage recess (storage portion) 122
- 124: lid (lid) 124
- 130: sealing and pumping device 130
- 131: casing (case) 131
- 134: lid 134
- 140: sealing and pumping device 140
- 141: casing (case) 141
- 144: lid 144
- 150: sealing and pumping device 150
- 151: casing (case) 151
- 154: lid 154
- 160: sealing and pumping device 160
- 161: casing (case) 161
- 164: lid 164
- 170: sealing and pumping device 170
- 171: casing (case) 171
- 174: lid 174
- 180: sealing and pumping device 180
- 181: casing (case) 181
- 184: lid 184
- 190: sealing and pumping device 190
- 191: casing (case) 191
- 194: lid 194

## Claims

1. A sealing and pumping device for injecting a sealing agent into a pneumatic tire by sending compressed air generated by an air supply source through a liquid agent container containing the sealing agent and into the pneumatic tire, the sealing and pumping device comprising:
a casing housing therein at least the air supply source and the liquid agent container; and a tipping suppression member that is provided to the casing so as to be projectable outside from the casing in the width direction thereof, with at least a portion of the tipping suppression member being placed on an installation surface, on which the casing is placed, to suppress tipping over of the casing.

2. The sealing and pumping device of claim 1, wherein: a storage portion is formed in the casing for storing at least one of a power cable used for supplying power to the air supply source, and/or an air-liquid supply tube that introduces sealing agent or compressed air flowing out from the liquid agent container into the pneumatic tire; and the tipping suppression member is a lid covering the storage portion.

3. The sealing and pumping device of claim 1 or claim 2, wherein the tipping suppression member is detachably mounted to the casing.

4. The sealing and pumping device of claim 1 or claim 2, wherein the tipping suppression member is rotatably supported on the casing.

5. The sealing and pumping device of claim 1 or claim 2, wherein the tipping suppression member is slidably supported on the casing.
